# EUROPEAN PATENT APPLICATION

(11) **EP 4 391 716 A1**
(43) Date of publication of application: **26.06.2024**
(21) Application number: 22857476.0
(22) Date of filing: 12.07.2022
(51) Int. Cl.: H04W 92/22

(54) **WIRELESS NETWORK CONTROL METHOD AND DEVICE**

(30) Priority: 16.08.2021 CN 202110937152
(71) Applicant: Datang Mobile Communications Equipment Co., Ltd., Beijing 100085 (CN)
(72) Inventor: SUN, Huiqing, Beijing 100085 (CN); HUANG, Yuanfang, Beijing 100085 (CN)
(74) Representative: Maiwald GmbH
(86) International application number: PCT/CN2022/105151
(87) International publication number: WO 2023/020163

(57) **Abstract**

Provided are a radio network control method and a radio network control device. The method comprises: transmitting, by a near real-time RAN intelligent controller (Near-RT RIC), a first message to a network node, wherein the first message includes first related information of K actions corresponding to a target service, and the network node is a network node controlled by the Near-RT RIC; and receiving, by the Near-RT RIC, a second message transmitted by the network node, where the second message is control-related information of the K actions, and K is greater than or equal to 1.

## Description

### CROSS-REFERENCE TO RELATED APPLICATION

This application claims a priority to Chinese Patent Application No. 202110937152.4 filed on August 16, 2021, the application of which is incorporated by reference herein in its entirety.

### TECHNICAL FIELD

The present disclosure relates to the field of communications technology, in particular to a radio network control method and a radio network control device.

### BACKGROUND

The near real-time RAN intelligent controller (Near Real-time RAN Intelligent Controller, Near-RT RIC) in open radio access network (Open Radio Access Network, O-RAN) controls an E2 node (Node) via an E2 interface based on functions opened by the E2 node, achieving the goal of optimizing RAN radio resources. The E2 service model (E2 Service Model) provides a series of RAN function open services, which include report (Report), insert (Insert), control (Control), and policy (Policy) services. The Insert service refers to suspending a normal function procedure by the E2 Node based on information subscribed by the Near-RT RIC, and triggering an Insert operation. The Control service refers to that the Near-RT RIC requests RAN to execute a specified action according to a control message.

In the related technologies, a method for controlling only an isolated and single action for Insert and Control operations is supported between the Near-RT RIC node and the E2 node, which hardly satisfies the application requirements in complex scenarios for radio resource management (Radio resource management, RRM) optimization, and makes obstacles to the real-time performance of radio resource management of the Near-RT RIC.

### SUMMARY

The present disclosure is to provide a radio network control method and a radio network control device, so as to solve a problem of complex radio resource management process caused by that only an isolated and single action is supported between a Near-RT RIC node and an E2 node in the control method of the related technologies.

An embodiment of the present disclosure provides a radio network control method, including:
transmitting, by a Near-RT RIC, a first message to a network node, where the first message includes first related information of K actions corresponding to a target service, and the network node is a network node controlled by the Near-RT RIC; and
receiving, by the Near-RT RIC, a second message transmitted by the network node, where the second message is control-related information of the K actions, and K is greater than or equal to 1.

Optionally, the target service is an insert service, and the first message is an RIC subscription request message used for subscribing to the insert service; and the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the Near-RT RIC to control the K actions of the network node.

Optionally, the insert indication message includes: a first information element and a second information element; the first information element includes: an identifier of a terminal corresponding to the network node and insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a sequence of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

An embodiment of the present disclosure provides a radio network control method, including:
receiving a first message transmitted by a Near-RT RIC, where the first message includes first related information of K actions corresponding to a target service, and the Near-RT RIC is a controller corresponding to the network node; and
transmitting a second message to the Near-RT RIC based on the first message, where the second message is control-related information of the K actions, and K is greater than or equal to 1.

Optionally, the target service is an insert service, and the first message is an RIC subscription request message used for subscribing to the insert service; and the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a list of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

An embodiment of the present disclosure provides a radio network control device, including: a memory, a transceiver and a processor. The memory is configured to store a computer program; the processor is configured to read the computer program from the memory; and the transceiver is configured to transmit and receive data under control of the processor, and perform the following operations:
transmitting a first message to a network node, where the first message includes first related information of K actions corresponding to a target service, and the network node is a network node controlled by a Near-RT RIC; and
receiving a second message transmitted by the network node, where the second message is control-related information of the K actions, and K is greater than or equal to 1.

Optionally, the target service is an insert service, and the first message is an RIC subscription request message used for subscribing to the insert service; and the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the Near-RT RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a list of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

An embodiment of the present disclosure provides a radio network control device, including: a memory, a transceiver and a processor. The memory is configured to store a computer program; the processor is configured to read the computer program from the memory; and the transceiver is configured to transmit and receive data under control of the processor, and perform the following operations:
receiving a first message transmitted by a Near-RT RIC, where the first message includes first related information of K actions corresponding to a target service, and the Near-RT RIC is a controller corresponding to the network node; and
returning a second message to the Near-RT RIC based on the first message, where the second message is control-related information of the K actions, and K is greater than or equal to 1.

Optionally, the target service is an insert service, and the first message is an RIC subscription request message used for subscribing to the insert service; and the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a list of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

An embodiment of the present disclosure provides a radio network control device, including:
a first transmitting unit, configured to transmit a first message to a network node, where the first message includes first related information of K actions corresponding to a target service, and the network node is a network node controlled by a Near-RT RIC; and
a first receiving unit, configured to receive a second message transmitted by the network node, where the second message is control-related information of the K actions, and K is greater than or equal to 1.

An embodiment of the present disclosure provides a radio network control device, including:
a second receiving unit, configured to receive a first message transmitted by a Near-RT RIC, where the first message includes first related information of K actions corresponding to a target service, and the Near-RT RIC is a controller corresponding to the network node; and
a second transmitting unit, configured to return a second message to the Near-RT RIC based on the first message, where the second message is control-related information of the K actions, and K is greater than or equal to 1.

An embodiment of the present disclosure provides a processor readable storage medium, on which a computer program is stored. When the computer program is executed by a processor, steps in the radio network control method described above are implemented.

The above-mentioned technical solutions in present disclosure have the following beneficial effects.

In the embodiments of the present disclosure, a Near-RT RIC transmits a first message including multiple actions corresponding to a target service to a network node controlled by the Near-RT RIC, and the network node feeds back a second message including multiple actions to the Near-RT RIC based on the first message, which achieves the control on multiple actions of the network node by the Near-RT RIC, enhances and optimizes the control method of the target service in the radio resource management process under a radio network intelligent architecture, and enables the Near-RT RIC to instruct the network node to achieve the RRM optimization goal by supporting the optimization control process of the target service based on multiple control actions, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

### BRIEF DESCRIPTION OF THE DRAWINGS

FIG. 1 shows a first schematic flowchart of a radio network control method according to an embodiment of the present disclosure;
FIG. 2 shows a second schematic flowchart of a radio network control method according to an embodiment of the present disclosure;
FIG. 3 shows a third schematic flowchart of a radio network control method according to an embodiment of the present disclosure;
FIG. 4 shows a fourth schematic flowchart of a radio network control method according to an embodiment of the present disclosure;
FIG. 5 shows a fifth schematic flowchart of a radio network control method according to an embodiment of the present disclosure;
FIG. 6 shows a first schematic structural diagram of a radio network control device according to an embodiment of the present disclosure;
FIG. 7 shows a second schematic structural diagram of a radio network control device according to an embodiment of the present disclosure;
FIG. 8 shows a third schematic structural diagram of a radio network control device according to an embodiment of the present disclosure; and
FIG. 9 shows a fourth schematic structural diagram of a radio network control device according to an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

Specifically, embodiments of the present disclosure provide a radio network control method and a radio network control device, which solves a problem of complex radio resource management process caused by that only an isolated and single action is supported between Near-RT RIC and E2 nodes in the control method of related technologies.

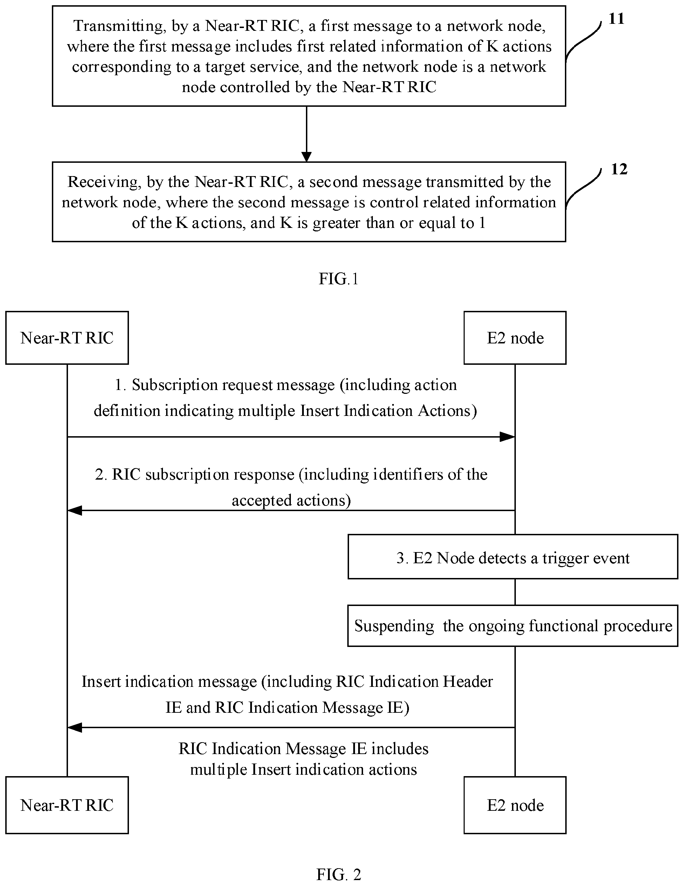

As shown in FIG. 1, an embodiment of the present disclosure provides a radio network control method, applied to a Near-RT RIC. The method specifically includes the following steps:
step 11, transmitting, by a near real-time RAN intelligent controller (Near-RT RIC), a first message to a network node, where the first message includes first related information of K actions corresponding to a target service, and the network node is a network node controlled by the Near-RT RIC; and
step 12: receiving, by the Near-RT RIC, a second message transmitted by the network node, where the second message is control-related information of the K actions, and K is greater than or equal to 1.

The network node is an E2 node, and the Near-RT RIC may control the E2 node via an E2 interface to achieve RAN radio resource optimization. When controlling the E2 node, the Near-RT RIC may transmit a first message to the E2 node, which includes information related to multiple control actions. That is, the Near-RT RIC can simultaneously transmit the information related to multiple actions to the E2 node. After receiving the first message, the E2 node performs an operation corresponding to the first message and returns a second message to the Near-RT RIC. The second message includes control-related information for the multiple actions, that is, the E2 node can simultaneously return control-related information for the multiple actions to the Near-RT RIC to achieve the control of multiple actions between the Near-RT RIC and the E2 node.

The target service includes an Insert service and a Control service. An example is given that the target service is an Insert service, that is, the Near-RT RIC achieves the optimization on the Insert procedure. The Near-RT RIC may transmit related information of multiple Insert actions to the E2 node at once to subscribe to an Insert service. The E2 node executes corresponding Insert operations based on the related information of the multiple Insert actions, returns action instructions of the multiple Insert actions to the Near-RT RIC, to request the Near-RT RIC to perform optimization control on the original process of the E2 node, for example, simultaneously modifying quality of service (Quality of Service, QoS) of data radio bearer (Data Radio Bearer, DRB) and performing QoS flow to DRB mapping, so as to improve radio resource utilization and achieve the objective such as satisfying the QoS requirements of users.

An example is given that the target service is a Control service, that is, a Near-RT RIC achieves the optimization on the Control service. The Near-RT RIC may transmit related information of multiple control actions to an E2 node at once, to request a control on multiple actions of the E2 node. After receiving the first message, the E2 node returns a corresponding execution result for the multiple Control actions, to enable the Near-RT RIC to perform subsequent control optimization processing.

In the embodiments of the present disclosure, a Near-RT RIC transmits a first message including multiple actions corresponding to a target service to a network node controlled by the Near-RT RIC. The network node feeds back a second message including multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

The implementation process of the radio network control method in the embodiment of the present disclosure will be explained below separately by taking an example that the target service is an Insert service, and an example that the target service is a Control service.

As an optional embodiment, the target service is an insert service, and the first message is an RIC subscription request message used for subscribing to the insert service; the first related information includes an action definition and a trigger event of the action, where the action definition indicates parameter information of an insert indication message corresponding to the K actions.

The second message is the insert indication message; the insert indication message is used to request the Near-RT RIC to control the K actions of the network node.

In the embodiment, the target service is an Insert service, and the first message is an RIC subscription request (RIC Subscription Request) message used to subscribe to the Insert service to a network node. The RIC subscription request message includes related information of multiple actions corresponding to the subscribed service, such as an action definition and a trigger event of the actions. The action definition is used to indicate an insert indication message for multiple actions (such as Insert Indication Actions). After receiving the subscription request message, the network node detects the trigger event, suspends an ongoing operation when the trigger event is detected, and returns the insert indication message to the Near-RT RIC to request the Near-RT RIC to perform optimization control on the multiple actions, so as to implement the Insert service based on the multiple actions.

Specifically, as shown in FIG. 2, the method may include the following steps.

Step 1: a Near-RT RIC first subscribes to an Insert service, i.e., transmitting a subscription request message to an E2 node to provide subscription related information, such as subscribing to an Insert action triggered by a given event. The action definition (Action Definition) provides multiple Insert Indication Actions to be triggered and related parameters thereof.

The action definition may include at least one of the following information:
the quantity of actions indicated by the insert indication message (Insert Indication Action Item);
an identifier of an insert indication action (Insert Indication ID);
a list of RAN parameters for the insert indication action (List of RAN parameters for Insert Indication);
the quantity of RAN parameters for the insert indication action (RAN Parameter Item for Insert Indication);
an identifier of the RAN parameter (RAN Parameter ID).

It should be noted that the action definition of multiple actions may be presented in the form of a list, that is, the related information of multiple actions forms a list (List of Insert Indication Actions), which includes information content corresponding to each of the actions. The action definition may include one or a combination of multiple of the above information contents, and may also include other information contents, such as UE ID. The quantity of actions indicated by the insert indication message may be a quantitative range, for example, ranging from 1 to the maximum quantity of insert actions; the quantity of RAN parameters for the insert indication action may be a quantitative range, for example, ranging from 1 to the maximum number of associated RAN parameters.

In an embodiment, an example is given that action definitions of multiple actions are in the form of a list, and the action definitions may be shown in Table 1:

**Table 1: New Definition of Information Element (IE) of Action Definition**

| IE/Group Name | Presence | Range | IE Type and Reference | Semantics Description |
|---|---|---|---|---|
| List of insert indication actions | | 1 | | To support multiple Insert actions |
| >Insert indication action item | | 1 to the maximum quantity of insert actions | | |
| >>Insert indication ID | M | | INTEGER (1..65535,...) | Referring to section 7.5 |
| >>List of RAN parameters for insert indication | M | 1 | | |
| >>>RAN parameter item for insert indication | | 1 to the maximum number of associated RAN parameters | | |
| >>>>RAN parameter ID | M | | INTEGER (1..65535,...) | Referring to section 8.3 |
| UE ID | O | | 9.3.10 complying with definition of UE ID in E2SM-RC | If INSERT is for a specific UE, it indicates to be subscribed to. |

In Table 1 above, "M" represents that the presence is mandatory (mandatory), and "O" represents whether the presence is optional (optional); "1" in a column of the range of "action list of insert indication" represents that the list needs to be included.

">", ">>", ">>>", ">>>>" and the like represent the hierarchy of various pieces of information. For example, "insert indication action item" is a next level of "list of insert indication actions", i.e., the action list of insert indication includes the insert indication action item; "insert indication ID" and "list of RAN parameters for insert indication" are the next level of "insert indication action item", the insert indication ID includes an identifier of each action indicated by the insert indication message; "RAN parameter item for insert indication" represents the next level of "list of RAN parameters for insert indication", i.e., the list of RAN parameters includes the quantity of RAN parameters; "RAN parameter ID" represents the next level of "RAN parameter item for insert indication", i.e., the RAN parameter ID includes an identifier of each RAN parameter of insert indication action. The hierarchy of the message in the other lists in the embodiments of the present disclosure are similar, and will not be repeated herein.

Table 1 provides range bound for the quantity of actions indicated by the insert indication message and the quantity of RAN parameters for the insert indication action. The definition of the range bound is shown in Table 2:

**Table 2**

| Range bound | Explanation |
|---|---|
| The maximum number of insert actions | The maximum number of insert actions supported by RAN function. The value is <65535>. |
| The maximum number of associated RAN parameters | The maximum number of RAN parameters of a given insert action supported by RAN function. The value is <65535>. |

Step 2: the E2 Node returns a subscription response to the Near-RT RIC based on the subscription request message, where the subscription response includes actions accepted by the E2 Node, for example, a list of accepted actions (which may include identifiers of the accepted actions).

Step 3: the E2 Node executes a corresponding Insert operation based on the information of multiple control actions provided by the subscription, that is, detecting a trigger event, after detecting the corresponding trigger event, such as that a radio resource (such as UE context, bearer context) is changed or needs to be established, suspends the ongoing normal functional procedure, and triggers a corresponding insert indication message (Insert Indication Actions) according to instructions in the Action Definition. Multiple control actions may be carried in the Insert Indication Actions, to request the Near-RT RIC to perform optimization control on the original process of the E2 Node, for example, simultaneously performing modification of DRB QoS and perform QoS flow to DRB mapping, so as to improve radio resource utilization and achieve the objective such as satisfying QoS requirements of users.

The insert indication message includes: a first information element and a second information element. The first information element is, for example, RIC indication header IE (RIC Indication Header IE), and the second information element is, for example, RIC indication message IE (RIC Indication Message IE). The first information element includes: an identifier of a terminal (UE ID) corresponding to the network node and RIC insert style types (RIC Insert Style Type) of the K actions, as shown in Table 3:

**Table 3: New definition of RIC Indication Header IE for an insert service**

| IE/Group Name | Presence | Scope | IE Type and Reference | Semantics Description |
|---|---|---|---|---|
| UE ID | M | | 9.3.10 | |
| RIC Insert Style Type | M | | INTEGER | |

The second information element may include at least one of the following:
the quantity of actions indicated by the insert indication message (Insert Indication Action Item);
identifiers of insert indication actions (Insert Indication ID);
a list of RAN parameters as requested (List of RAN parameters requested);
the quantity of RAN parameters as requested (RAN parameters requested item);
identifiers of RAN parameters (RAN Parameter ID);
value types of RAN parameters (RAN Parameter Value Type).

The RIC Indication Message IE may include one or more of the above information, and the RIC Indication Message IE for multiple actions may be implemented in the form of a list, that is, the second information element corresponding to multiple actions may be formed into a list, for example, an action list of insert indication message (List of Insert Indication Actions). The list may be shown in Table 4:

**Table 4: Newly defined RIC Indication Message IE**

| IE/Group Name | Presence | Range | IE Type and Reference | Semantics Description |
|---|---|---|---|---|
| List of insert indication actions | | 1 | | supporting multiple Insert actions |
| >Insert indication action item | M | 1 to the maximum quantity of insert actions | | |
| >>Insert indication ID | M | | INTEGER (1..65535, ...) | |
| >>List of RAN parameters requested | | 0..1 | | |
| >>>RAN parameter item requested | | 1 to the maximum number of | | |
| | | associated RAN parameters | | |
| >>>>RAN parameter ID | M | | INTEGER (1..65535, ...) | Referring to section 8.3 |
| >>>> RAN parameter value type | M | | 9.3.11 RAN parameter structure defined in E2SM-RC remains unchanged and is divided into three types of parameter representation: element, structure and list | Referring to section 8.3 |

Table 4 above provides ranges of the quantity of actions indicated by the insert indication message and the quantity of RAN parameters requested, which may be defined as shown in Table 5:

**Table 5**

| Range bound | Explanation |
|---|---|
| The maximum quantity of insert actions | The maximum quantity of insert actions supported by RAN function. The value is <65535>. |
| The maximum number of associated RAN parameters | The maximum number of RAN parameters of a given insert action supported by RAN function. The value is <65535>. |

The "list of insert indication actions" in Table 4 represents that multiple Insert Actions can be supported under a given insert style (Insert Style), and each Insert Action is identified by an Insert Indication ID. The "list of RAN parameters requested" represents the types of configuration parameters that may be carried under the Insert Action. Due to the one-to-one correspondence between definitions of Insert Indication Actions and Control Actions under a certain Insert Style, it essentially informs the Near-RT RIC of what control commands and parameters are needed for the E2 Node at this time, for the flexible configuration of resource optimization parameters for subsequent Control Actions.

In the embodiment, the E2 node is configured with an Insert operation based on multiple control actions during the subscription procedure. After a specified event is triggered, the E2 node suspends a normal procedure based on the Insert operation required by the subscription, and triggers an Insert message to request a specified control action and parameter configuration from the Near-RT RIC based on the Insert operation indicated by the multiple Insert Indication IDs and related RAN parameters. In order to support multiple Insert Actions by radio resource control during the Insert procedure, the key information elements including the RIC Indication Header IE and the RIC Indication Message IE in the RIC Indication message in step 3 may be designed in the form shown in Table 3 and Table 4, respectively. Based on the above procedures and message mechanism, the Near-RT RIC may subscribe to the Insert service to cause the E2 Node to suspend in a certain functional entity procedure, and may simultaneously inform the Near-RT RIC of subsequent multiple actions that can be executed for optimization control. This facilitates the Near-RT RIC to perform RAN resource analysis and provide optimization control operations for radio resource configuration, achieving the objective of RRM intelligent optimization control.

The above describes the radio network control method when the target service is an Insert service, and the following describes a radio network control method when the target service is a Control service.

As an optional embodiment, the target service is a control service, and the first message is a control request message for requesting the control service from the network node; the first related information includes control information of the K actions. The second message is an RIC control acknowledge message corresponding to the control request message; the RIC control acknowledge message includes an execution result of each of the K actions by the network node.

It should be noted that the Control service may be triggered by a control action of an Insert request, or internally triggered by the Near-RT RIC. Optionally, the transmitting the first message to the network node includes: transmitting, by the Near-RT RIC, the first message to the network node, in a case that a triggering condition is met, where the triggering condition includes at least one of the following: the RIC has received the insert indication message transmitted by the network node (i.e., the Control procedure is triggered by the control action of the Insert request); the RIC has detected an internal trigger event of the RIC (i.e., the Control procedure is internally triggered in the Near-RT RIC), which will be explained separately below.

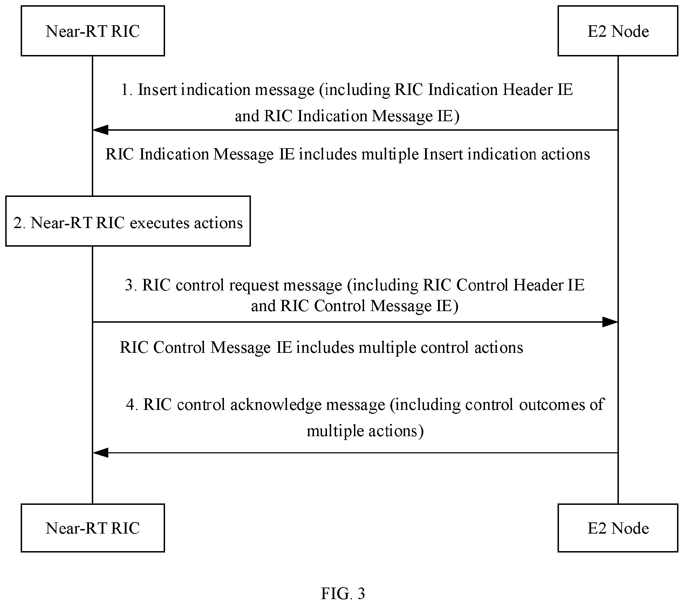

Example 1, taking a Control service triggered by Insert as an example, as shown in FIG. 3, the method includes:
step 1: an E2 Node triggers an Insert operation based on Insert related information requested during a subscription procedure, and transmits an insert indication (Insert Indication) message carrying multiple Insert actions (Action 1, Action 2, ...) to a Near-RT RIC, which may also carry RIC Call Process ID (RIC Call Process ID) to identify a process breakpoint where the E2 Node has suspended internally;
step 2: the Near-RT RIC executes actions corresponding to the Insert Indication message based on a specific RRM target, according to information provided by the Insert Indication, so as to configure radio resource optimization instructions;
step 3: the Near-RT RIC transmits an RIC control request (RIC Control Request) message to the E2 Node, and returns whether each of the actions is accepted based on the multiple actions provided by Insert. The Control Message includes multiple Control Actions (Control Action 1, Control Action 2, ...) that are configured synchronously, and the process breakpoint in the E2 Node is identified by the carried RIC Call Process ID. The radio resource allocation optimization configuration is achieved for this procedure based on the control action indicated by the control information of the action (Control Action) and the carried RAN parameters.

It should be noted that when the Near-RT RIC does not accept an Action specified in Insert, a RAN parameter may not be carried, that is, not to perform optimization configuration for this action.

The control information of the action includes a third information element and a fourth information element. The third information element may be an RIC control header IE (RIC Control Header IE), and the fourth information element may be an RIC control message IE (RIC Control Message IE). The third information element includes: an identifier of a terminal (UE ID) corresponding to the network node and RIC style types (RIC Style Type) of the K actions that need to be controlled, as shown in Table 6.

**Table 6: New definition of RIC Control Header IE**

| IE/Group Name | Presence | Range | IE Type and Reference | Semantics Description |
|---|---|---|---|---|
| UE ID | M | | 9.3.10 | To identify a controlled UE |
| RIC Insert Style Type | M | | INTEGER | To indicate a type of a control service that needs to be controlled by Near-RT RIC |

The fourth information element may include at least one of the following:
the quantity of control actions (Control Action Item);
an identifier of a control action (Control Action ID);
RIC control decision (RIC Control decision);
a list of RAN parameters (List of RAN parameters);
the quantity of RAN parameters (RAN parameters item);
an identifier of the RAN parameter (RAN Parameter ID);
a value type of a RAN Parameter (RAN Parameter Value Type).

It should be noted that the RIC Control Message IE may be presented in the form of a list, that is, control information of multiple actions forms a list, such as a list of control actions (List of Control Actions), which includes information content corresponding to each action. The action definition may include one or a combination of multiple of the above information contents, and may also include other information contents, which is not limited thereto. The quantity of control actions may be a quantitative range, for example, ranging from 1 to the maximum number of control actions; the quantity of RAN parameters may be a quantitative range, for example, ranging from 1 to the maximum number of associated RAN parameters. The fourth information element may be shown in Table 7.

**Table 7: New definition of RIC Control Message IE**

| IE/Group Name | Presence | Range | IE Type and Reference | Semantics Description |
|---|---|---|---|---|
| List of control actions | | 1 | | |
| > Control action item | | 1 to the maximum quantity of control actions | | |
| >> Control action ID | M | | INTEGER (1..65535,...) | |
| >> RIC control decision | O | | for example (accept, reject) | |
| >> List of RAN parameters | | 0..1 | | |
| >>> RAN parameters item | | 1 to the maximum | | |
| | | quantity of associated RAN parameters | | |
| >>>> RAN parameter ID | M | | INTEGER (1..65535,...) | Referring to section 8.4 |
| >>>> RAN parameter value type | M | | 9.3.11 | Referring to section 8.4 |
| | | | RAN parameter structure defined in E2SM-RC remains unchanged and is divided into three types of parameter representation: element, structure and list | |

In Table 7, "RAN parameter ID" and "RAN parameter value type" are the next level of "RAN parameters item", where the RAN parameter ID includes an identifier of each of the RAN parameters, and the RAN parameter value type includes a value type of each RAN parameter; the RAN parameters item provides the limit range for the quantity of RAN parameters.

Table 7 provides range bounds for the quantity of control actions and the quantity of RAN parameters. The definitions of the range bounds are shown in Table 8:

**Table 8**

| Range bound | Explanation |
|---|---|
| The maximum number of associated RAN parameters | The maximum number of RAN parameters of a specific control action supported by RAN function. The value is <65535>. |
| The maximum number of control actions | The maximum number of control actions supported by RAN function. The value is <65535>. |

The List of Control Actions in the RIC Control Message indicates that multiple Control Actions can be encapsulated simultaneously in a control message under a given Control Style, and each Control Action is identified by the Control Action ID. For each Control Action, the RIC Control decision indicates whether to accept a Control Action indicated by an Insert Indication ID carried in an Indication message when the Control Action is used as a reply to an Insert service; the List of RAN parameters includes configuration parameters that may be carried under this Control Action. It is worth noting that when the RIC Control decision is reject (reject), it indicates that the Control Action is not accepted by the Near-RT RIC, and the RAN Parameters may not be carried.

Step 4: the E2 Node receives a control request message and synchronously returns a corresponding execution result for each control action in multiple actions, and transmits an RIC control acknowledge (RIC Control acknowledge) message to the Near-RT RIC, to facilitate the further processing by the Near-RT RIC.

In step 4, the E2 Node receives the RIC Control Request message, determines whether to perform the corresponding action, and returns a control outcome (Control Outcome) for multiple Control Actions in the RIC Control Acknowledge message, that is, carrying an execution result of the Control command through the Control Outcome IE. The RIC control acknowledge message may include at least one of the following:
the quantity of control action outcomes (Control Action Outcome Item);
an identifier of a control action (Control Action ID);
a sequence of RAN parameters (Sequence of RAN Parameters);
the quantity of RAN parameters (RAN parameters item);
an identifier of the RAN parameter (RAN Parameter ID);
a value type of a RAN Parameter (RAN Parameter Value Type).

In the embodiment, the RIC control acknowledge message (i.e., the control execution result) may include one or more of the above information, and the control information of multiple actions included in the RIC control acknowledge message may be implemented in the form of a list, such as a list of control action outcomes (List of Control Action Outcome), as shown in Table 9.

**Table 9: New definition of Control Outcome**

| IE/Group Name | Presence | Range | IE Type and Reference | Semantics Description |
|---|---|---|---|---|
| List of control outcomes | | 1 | | |
| > Control action outcome item | | 1 to the maximum quantity of control actions | | |
| >> Control action ID | M | | INTEGER (1..65535, ...) | |
| >> Sequence of RAN parameters | | 1 | | |
| >>> RAN parameters item | | 1 to the maximum quantity of RAN outcome parameters | | |
| >>>> RAN Parameter ID | M | | INTEGER (1..65535, ...) | |
| >>>> RAN Parameter Value Type | M | | 9.3.14 | |
| | | | To select one of types defined in E2SM-RC | |

Optionally, in a case where the network node accepts to execute a target action, the sequence of RAN parameters carries a received timestamp (Received Timestamp) of the target action.

In a case that the network node accepts to execute at least one of the K actions, the second message is an RIC control acknowledge message corresponding to the control request message.

In the embodiment, for each Control Action, if the E2 Node accepts to execute the action, the Sequence of RAN Parameters in the above step 4 carries the parameter Received Timestamp (or may carry other additional parameters); if a certain Control Action is not supported, there is no need to include a Control Action ID and related parameters. For all the Control Actions, the E2 Node returns an RIC control acknowledge message if the E2 Node accepts at least one of the Control Actions, i.e., the RIC control acknowledge message includes at least one accepted action. If the E2 Node does not accept all the actions, an RIC control failure (RIC Control Failure) message will be sent.

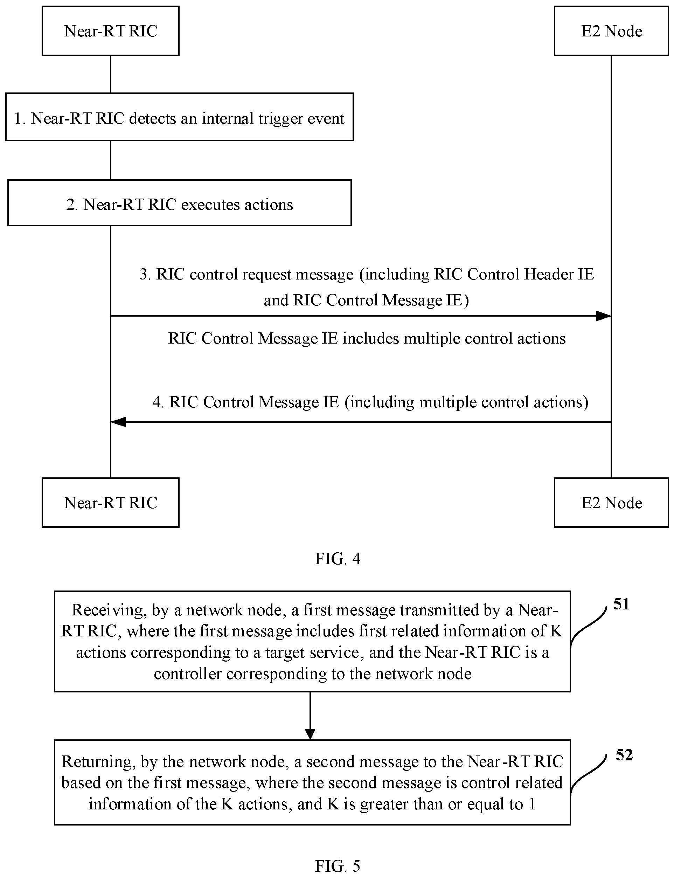

Example 2, taking a Control service triggered internally by Near-RT RIC as an example, as shown in FIG. 4, the method includes the following steps.

Step 1: the Near-RT RIC detects an internal trigger event (e.g., determined based on a relevant RAN resource measurement result reported by the E2 Node).

Step 2: the Near-RT RIC executes corresponding actions based on a specific RRM optimization target, so as to configure radio resource optimization instructions.

Step 3: the Near-RT RIC transmits a control request message to the E2 Node, where the Control Message includes multiple Control Actions (Control Action 1, Control Action 2, ...) that are synchronously configured, and performs radio resource optimization configuration on an ongoing procedure of the E2 Node, based on control actions indicated by the Control Action and the carried RAN parameters.

It should be noted that since it is a control instruction triggered internally by the Near-RT RIC and is not related to the Insert procedure, there is no need to return the RIC control decision IE for the Insert action, and a Call Process ID does not need to be carried.

Step 4: the E2 Node accepts the control request, returns an execution result of each control action in the multiple actions, and transmits an RIC Control Acknowledge message to the Near-RT RIC for further processing.

Information contents and constituents of key information elements RIC Control Header, RIC Control Message, and RIC Control Outcome IE in the above control procedure are the same as those shown in Tables 6 to 9 in the above embodiment, and will not be repeated here.

The embodiment can achieve synchronous configuration of multiple control actions based on radio network control optimization for the multiple actions, and can provide feedback on execution results of multiple control actions simultaneously, which can effectively improve the timeliness and effectiveness of the radio resource management configuration procedure, reduce the risk of conflicts caused by asynchronous transmitting of the control action request and the feedback message.

Specific examples are used below to explain application process of the radio network control method for controlling services under different triggering conditions.

Example 1: application process of RBC control for multiple actions internally triggered by Near-RT RIC.

To concretize Control services, E2 SM-RC defines multiple control service styles (Control Service Style) as the presentation of refined RRM functions. Control services are mainly aimed at traffic steering (Traffic steering) and QoS optimization, such as Style 1: radio bearer control (Radio Bearer Control), Style 2: radio resource allocation control (Radio Resource allocation control), and Style 3: connected mode mobility control (Connected Mode Mobility control), etc. The embodiment is for controlling and configuring a service of Style 1: Radio Bearer Control.

For each Control Style, fine-grained Control Actions can be further defined to implement control. For example, 7 Control Actions are defined for RBC, as shown in Table 10:

**Table 10: Control Action Supported by Style 1-RBC**

| Control Action ID | Control Action Name | Control Action description |
|---|---|---|
| 1 | DRB QoS Configuration | To control the configuration of DRB QoS profile |
| 2 | QoS flow mapping configuration | To control the multiplexing of QoS flows to a DRB (addition, modification, deletion) |
| 3 | Logical channel configuration | To control the LCID configuration of DRB |
| 4 | Radio admission control | To control radio admission of a UE |
| 5 | DRB termination control | To control the change in bearer termination point |
| 6 | DRB split ratio control | To control the split ratio of a DRB across its RLC entities |
| 7 | PDCP Duplication control | To control activation or de-activation of PDCP duplication for DRB, and control/configure the quantity of legs or RLC entities for the DRB(s) |

For multiple Control Actions, each Control Action corresponds to its corresponding RAN Parameter. A Near-RT RIC configures values of these parameters, encapsulates them into an RIC Control Message IE of a control request message, and transmits the control request message to an E2 Node. The E2 Node receives the corresponding Control Action and the configured parameters, executes a corresponding process and completes the optimization goals guided by the Near-RT RIC.

It is assumed that a Near-RT RIC independently initiates a control request command in an internal mechanism, without involving the Insert service process.
1) The control process is initiated by an internal process of the Near-RT RIC, and an RIC Control Request message is transmitted, which includes RIC Request ID, RAN Function ID, RIC Control Header and RIC Control Message IE. The RIC Control Header may be shown in Table 11.

**Table 11: Specific Content of RIC Control Header of RBC Control Service**

| Information Element | Value | Explanation |
|---|---|---|
| UE ID | Assuming that E2 Node is gNB connected to 5GC as a whole, a value of UE ID is AMF UE NGAP ID+GUAMI, and RAN UE ID is optional | Specified UE ID |
| RIC Style Type | 1 | Radio Bearer Control |

As shown in Table 11, in the case where E2 Node is gNB connected to 5GC as a whole, the UE ID may be a specified identifier, such as access and mobility management function (Access and Mobility Management Function, AMF) UE NG application protocol (NG Application Protocol, NGAP) identifier, and globally unique AMF identifier (Globally Unique AMF Identifier, GUAMI), that is, the UE ID is AMF UE NGAP ID+GUAMI.

The RIC Control Message may be shown in Table 12:

**Table 12: Specific Content of RIC Control Message of RBC Control Service**

| Parameter | Value | Explanation |
|---|---|---|
| List of control actions | 1 | A set of Control Actions |
| > Control action item 0 | | It is assumed to contain 2 Control Actions |
| >> Control action ID | 1 | DRB QoS configuration |
| >> List of RAN parameters | LIST: x items | Parameters for configuring control action 1 |
| >>>RAN parameters item | | |
| >>>>RAN parameter ID | 1 | DRB ID |
| >>>>RAN parameter value | xxx | A specific value of a parameter |
| ...... | | |
| > Control action item 1 | | |
| >> Control action ID | 2 | QoS flow mapping configuration |
| >>List of RAN parameters | | Parameters for configuring control action 2 |
| ...... | | |

The mapping relationship of Control Action ID is shown in Table 10. In Table 12, "control action item 0" refers to item 0 in the quantity of control actions (RAN parameters item). Assuming that the quantity of control actions is 5, and items are 0 to 4, the control action item 0 is the "0^{th}" item of the items, and control action item 1 is the "1^{st}" item of the items.

In the Control Message, two Control Actions are synchronously configured for Control Service Style 1: Radio Bearer Control, which are: DRB QoS configuration (DRB QoS configuration) and QoS flow mapping configuration (QoS Flow mapping). Each Control Action includes its own configured parameters.

2) After receiving the RIC Control Request message, the E2 Node may locate a target functional entity based on an RAN Function ID carried in the message, may initiate relevant processes based on specific control commands and control parameters in the RIC Control Header and the Control Message, and may synchronously execute relevant control actions to optimize the configuration of radio resources. This embodiment can optimize radio carrier control to meet the QoS optimization indicator and the like, and can return RIC Control Acknowledge messages to the Near-RT RIC based on an execution result of each Control Action.

Example 2: application process of RBC control for multiple actions triggered by Insert.

It is assumed that Insert triggers the Near-RT RIC to initiate a Control Request command, key information elements included in the insert indication message are shown in Tables 13 and 14:

**Table 13: Specific Content of RIC Indication Header of RBC Insert Service**

| Information Element | Value | Explanation |
|---|---|---|
| UE ID | Assuming that E2 Node is gNB connected to 5GC as a whole, a value of UE ID is AMF UE NGAP ID+GUAMI, and RAN UE ID is optional | Specified UE ID |
| RIC Insert Style | 1 | Radio Bearer Control Request: to |
| Type | | indicate that RBC related control is requested for a current Insert service |

**Table 14: Specific Content of RIC Indication Message of RBC Insert Service**

| Parameter | Value | Explanation |
|---|---|---|
| List of insert indication actions | 1 | A set of insert actions |
| > Action item 0 indicated by an insert indication message | | Assuming that 2 Insert Actions are included |
| >>Insert indication action ID | 1 | DRB QoS configuration request |
| >> List of RAN parameters requested | LIST: x items | Parameter for configuring Insert indication action 1 |
| >>>RAN parameter 0 requested | | |
| >>>>RAN parameter ID | 1 | DRB ID |
| >>>>RAN parameter value type | xxx | A specific type of this parameter |
| ...... | | |
| > Action item 1 indicated by an insert indication message | | |
| >> Insert indication action ID | 2 | QoS flow mapping configuration request |
| >>List of RAN parameters | | Parameter for configuring Insert indication action 2 |
| ...... | | |

In Table 14, "action item 0 indicated by an insert indication message" refers to item 0 in the quantity of actions indicated by the insert indication message (Insert Indication Action Item). Assuming the quantity of control actions is 5, and items are 0 to 4, the action item 0 indicated by the insert indication message is the "0^{th}" item of the items, and the action item 1 indicated by the insert indication message is the "1^{st}" item of the items.

In the Indication Message, synchronous configurations of two actions are requested for a subsequent Control service for Insert Service Style 1: Radio Bearer Control Request, which are: DRB QoS configuration request and QoS Flow mapping configuration request. The Insert Indication Action configured for each request includes configuration parameters of this request.

The Control process is triggered by the Insert, and corresponding configuration values are given based on the control actions requested in the Insert message. The specific content of the RIC Control Message may be configured as shown in Table 15. Compared to the control process triggered internally by the Near-RT RIC, an RIC Control decision indicates whether to accept a control action requested by the Insert for each Control Action, and if the control action is not accepted, the RIC Control decision may be configured as reject, and there is no need to carry corresponding RAN parameters.

**Table 15: Specific Content of RIC Control Message of RBC Control Service**

| Parameter | Value | Description |
|---|---|---|
| List of control actions | 1 | A set of Control Actions |
| > Control action item 0 | | It is assumed to contain 2 Control Actions |
| >> Control action ID | 1 | DRB QoS configuration |
| >>RIC control decision | | To indicate to accept the action requested by Insert |
| >> List of RAN parameters | LIST: x items | Parameters for configuring control action 1 |
| ...... | | |
| > Control action item 1 | | |
| >> Control action ID | 2 | DRB QoS configuration |
| >> RIC control decision | accept | To indicate to accept the action requested by Insert |
| >> List of RAN parameters | | Parameters for configuring control action 2 |
| ...... | | |

In Table 15, "control action item 0" refers to item 0 in the quantity of control actions (RAN parameters item). Assuming that the quantity of control actions is 5, and items are 0 to 4, the control action item 0 refers to the "0^{th}" item of the items, and control action item 1 refers to the "1^{st}" item of the items.

Optionally, for some Control Services, if simultaneous configurations of multiple Control Actions are not supported, only a single Control Action may be included in the list of control actions. For example, Control Style 3: Connected Mode Mobility includes three feasible Control Actions: handover control (Handover control), conditional handover control (conditional handover control) and dual-active protocol stack (DualActive Protocol Stack, DAPS) handover control. Due to the fact that three types of switching controls cannot be configured simultaneously, a Near-RT RIC configures only one of the Control Actions and its parameters.

This embodiment optimizes Insert and Control processes in the wireless network intelligent architecture in the related technologies to support the control optimization method for multiple actions: 1) implementing optimization of the Insert process and the message mechanism based on multiple actions; 2) implementing optimization of control process and the message mechanism based on multiple actions (including control request and control result feedback processes).

In the embodiments of the present disclosure, a Near-RT RIC transmits a first message including multiple actions corresponding to a target service to a network node controlled by the Near-RT RIC. The network node feeds back a second message including multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation. The control optimization method based on multiple actions can adapt to a wider range of use requirements and meet the goal of complex RRM optimization.

As shown in FIG. 5, an embodiment of the present disclosure further provides a radio network control method, applied to a network node. The network may be an E2 node. The method includes:
Step 51: receiving, by the network node, a first message transmitted by a Near-RT RIC, where the first message includes first related information of K actions corresponding to a target service, and the Near-RT RIC is a controller corresponding to the network node; and
Step 52: returning, by the network node, a second message to the Near-RT RIC based on the first message, where the second message is control-related information of the K actions, and K is greater than or equal to 1.

In an embodiment, the network node is an E2 node, and the Near-RT RIC may control the E2 node via an E2 interface to achieve RAN radio resource optimization. When controlling the E2 node, the Near-RT RIC may transmit a first message to the E2 node, where the first message includes information related to multiple control actions. That is, the Near-RT RIC can simultaneously transmit the information related to multiple actions to the E2 node. After receiving the first message, the E2 node performs an operation corresponding to the first message and returns a second message to the Near-RT RIC. The second message includes control-related information for the multiple actions, that is, the E2 node can simultaneously transmit control-related information for the multiple actions to the Near-RT RIC to achieve the control of multiple actions between the Near-RT RIC and the E2 node.

The target service includes an Insert service and a Control service. An example is given that the target service is an Insert service, that is, the Near-RT RIC achieves the optimization on the Insert procedure. The Near-RT RIC may transmit related information of multiple Insert actions to the E2 node at once to subscribe to an Insert service. The E2 node executes corresponding Insert operations based on the related information of the multiple Insert actions, feeds back action instructions of the multiple Insert actions to the Near-RT RIC, to request the Near-RT RIC to perform optimization control on the original procedure of the E2 node, for example, simultaneously modifying quality of service (Quality of Service, QoS) of data radio bearer (Data Radio Bearer, DRB) and performing QoS flow to DRB mapping, so as to improve radio resource utilization and achieve the objective such as satisfying the QoS requirements of users.

An example is given that the target service is a Control service, that is, the Near-RT RIC achieves the optimization on the Control service. The Near-RT RIC may transmit related information of multiple control actions to the E2 node at once, to request a control on multiple actions of the E2 node. After receiving the first message, the E2 node returns a corresponding execution result for the multiple Control actions, to enable the Near-RT RIC to perform subsequent control optimization processing.

As an optional embodiment, the target service is an insert service, and the first message is an RIC subscription request message for subscribing to the insert service. The first related information includes: action definition and trigger event of each action, where the action definition indicates parameter information of an insert indication message corresponding to the K actions.

The second message is the insert indication message; the insert indication message is used to request the RIC to control the K actions on the network node.

In the embodiment, the target service is an Insert service, and the first message is an RIC subscription request (RIC SUBSCRIPTION REQUEST) message used to subscribe to the Insert service to a network node. The RIC subscription request message includes related information of multiple actions corresponding to the subscribed service, such as an action definition and a trigger event. The action definition is used to indicate an insert indication message for multiple actions (such as Insert Indication Actions). After receiving the subscription request message, the network node detects the trigger event, suspends an ongoing operation when the trigger event is detected, and feeds the insert indication message back to the Near-RT RIC to request the Near-RT RIC to perform optimization control on the multiple actions, so as to implement the Insert service based on the multiple actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the insert indication message includes: a first information element and a second information element; the first information element includes: an identifier of terminal corresponding to the network node and RIC insert style types of the K actions; the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

In a case where the target service is an Insert service, the implementation process of the radio network control method in an embodiment of the present disclosure is shown in FIG. 2, and will not be elaborated herein.

As an optional embodiment, the target service is a control service, and the first message is a control request message used for requesting to perform the control service to the network node. The first related information includes control information of the K actions.

Optionally, the second message is an RIC control acknowledge message corresponding to the control request message. The RIC control acknowledge message includes an execution result of each of the K actions by the network node.

In the embodiment, the Control service may be triggered by a control action requested by Insert, or internally triggered by the Near-RT RIC. Optionally, the returning the second message to the RIC based on the first message includes: detecting a trigger event based on the first message; in a case where the trigger event is detected, suspending a functional operation that is being executed, and returning a second message to the RIC according to the action definition.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the RIC control acknowledge message includes at least one of the following:
the quantity of control action results;
identifiers of control actions;
a sequence of RAN parameters;
the quantity of RAN parameters;
identifiers of RAN parameters;
value types of RAN parameters.

The implementation process of the Control service triggered by Insert is shown in FIG. 3, and the implementation process of the Control service triggered internally by Near-RT RIC is shown in FIG. 4, which are not repeatedly described herein.

Optionally, the sequence of RAN parameters carries a received timestamp of a target action, in a case where the network node accepts to execute the target action. The second message is the RIC control acknowledge message corresponding to the control request message, in a case where the network node accepts to execute at least one of the K actions.

In the embodiment, for each of the control actions, if the E2 Node accepts to execute a certain action, a parameter Received Timestamp is carried in the list of RAN parameters; if a certain Control Action is not supported, there is no need to carry its Control Action ID and related parameters. For all the Control Actions, the E2 Node returns an RIC control acknowledge message, if the E2 Node accepts at least one of the Control Actions. If the E2 Node does not accept any of the actions, an RIC control failure message will be returned.

In the embodiments of the present disclosure, a Near-RT RIC transmits a first message including multiple actions corresponding to a target service to a network node controlled by the Near-RT RIC. The network node feeds back a second message including the multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

It should be noted that all embodiments involving the network node among the above embodiments applied to the Near-RT RIC are applicable to the embodiments applied to the network node, and can achieve the same technical effects, which will not be elaborated herein.

The method of the present disclosure is illustrated in above embodiments. The following embodiments will further explain the corresponding devicees in conjunction with the accompanying drawings.

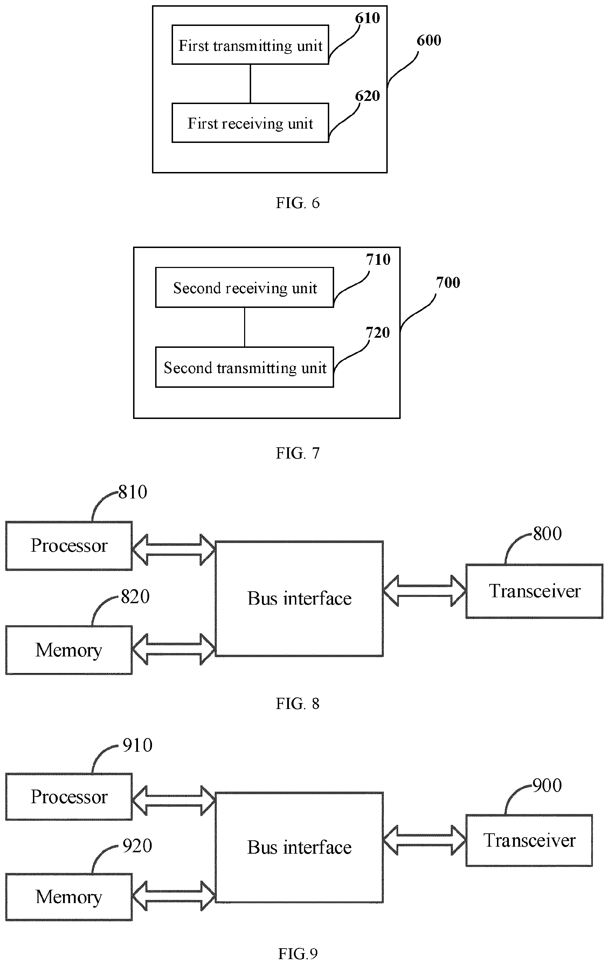

Specifically, as shown in FIG. 6, a radio network control device 600 is provided according to an embodiment of the present disclosure, which is applied to a Near-RT RIC and includes:
a first transmitting unit 610, configured to transmit a first message to a network node, where the first message includes first related information of K actions corresponding to a target service, and the network node is a network node controlled by a Near-RT RIC; and
a first receiving unit 620, configured to receive a second message transmitted by the network node, where the second message is control-related information of the K actions, and K is greater than or equal to 1.

Optionally, the target service is an insert service, and the first message is an RIC subscription request message used for subscribing to the insert service; the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the Near-RT RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a sequence of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

In the embodiments of the present disclosure, a Near-RT RIC transmits a first message including multiple actions corresponding to a target service to a network node controlled by the Near-RT RIC. The network node feeds back a second message including multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

It should be noted that the above-mentioned device provided in the embodiment of the present disclosure can achieve all the method steps of the method embodiments applied to the Near-RT RIC, and can achieve the same technical effects. The description and beneficial effects of this embedment that are the same as the method embodiments will not be described here in detail.

Specifically, as shown in FIG. 7, a radio network control device 700 is provided according to an embodiment of the present disclosure, applied to a network node, which may be an E2 node. The device includes:
a second receiving unit 710, configured to receive a first message transmitted by a Near-RT RIC, where the first message includes first related information of K actions corresponding to a target service, and the Near-RT RIC is a controller corresponding to the network node; and
a second transmitting unit 720, configured to transmit a second message to the Near-RT RIC based on the first message, where the second message is control-related information of the K actions, and K is greater than or equal to 1.

Optionally, the target service is an insert service, and the first message is an RIC subscription request message used for subscribing to the insert service; and the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a list of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

In the embodiments of the present disclosure, a Near-RT RIC transmits a first message including multiple actions corresponding to a target service to a network node controlled by the Near-RT RIC. The network node feeds back a second message including multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

It should be noted that the above-mentioned device provided in the embodiment of the present disclosure can achieve all the method steps of the method embodiments applied to the network node, and can achieve the same technical effects. The description and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor (processor) to execute all or part of the steps of the methods described in the various embodiments of the present disclosure. The aforementioned storage media include: a universal serial bus (USB) flash drive, removable hard disk, read-only memory (Read-Only Memory, ROM), random access memory (Random Access Memory, RAM), magnetic disk, optical disc or other media that can store program codes.

As shown in FIG. 8, an embodiment of the present disclosure further provides a radio network control device, applied to a Near-RT RIC. The device includes: a memory 820, a transceiver 800 and a processor 810. The memory 820 is configured to store a computer program; the processor 810 is configured to read the computer program from the memory; the transceiver 800 is configured to transmit and receive data under control of the processor 810, and perform the following steps:
transmitting a first message to a network node, where the first message includes first related information of K actions corresponding to a target service, and the network node is a network node controlled by a Near-RT RIC; and
receiving a second message transmitted by the network node, where the second message is control-related information of the K actions, and K is greater than or equal to 1.

Optionally, the target service is an insert service, and the first message is an RIC subscription request message used for subscribing to the insert service; the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the Near-RT RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a list of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

In the embodiments of the present disclosure, a Near-RT RIC transmits a first message including multiple actions corresponding to a target service to a network node controlled by the Near-RT RIC. The network node feeds back a second message including multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

In FIG. 8, the bus architecture may include any number of interconnected buses and bridges. Specifically, various circuits of one or more processors represented by the processor 810 and a memory represented by the memory 820 are linked together. The bus architecture may also link various other circuits such as peripheral devices, voltage regulators, power management circuits, etc., which are well-known in the art, and therefore, no further descriptions are provided herein. The bus interface provides an interface. The transceiver 800 may be a plurality of elements, that is, include a transmitter and a receiver, and provide a unit for communicating with various other devices on a transmission medium. The processor 810 is responsible for managing the bus architecture and general processing, and the memory 820 may store data used by the processor 810 when performing operations.

The processor 810 may be a central processing unit (CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor may also adopt a multicore architecture.

It should be noted that the above-mentioned device provided in the embodiment of the present disclosure can achieve all the method steps of the method embodiments applied to the Near-RT RIC, and can achieve the same technical effects. The description and beneficial effects of this embedment that are the same as the method embodiments will not be described here in detail.

As shown in FIG. 9, an embodiment of the present disclosure further provides a radio network control device, which is a network node, and the network node may be an E2 node. The device includes a memory 920, a transceiver 900 and a processor 910. The memory 920 is configured to store a computer program; the processor 910 is configured to read the computer program from the memory; the transceiver 900 is configured to transmit and receive data under control of the processor 910, and perform the following steps:
receiving a first message transmitted by a Near-RT RIC, where the first message includes first related information of K actions corresponding to a target service, and the Near-RT RIC is a controller corresponding to the network node; and
transmitting a second message to the Near-RT RIC based on the first message, where the second message is control-related information of the K actions, and K is greater than or equal to 1.

Optionally, the target service is an insert service, and the first message is an RIC subscription request message used for subscribing to the insert service; and the first related information includes: an action definition and a trigger event of the action, where the action definition indicates parameter information of an insert indication message corresponding to the K actions.

Optionally, the action definition includes at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

Optionally, the second message is the insert indication message; and the insert indication message is used to request the RIC to control the K actions of the network node.

Optionally, the insert indication message includes: a first information element and a second information element; the first information element includes: an identifier of a terminal corresponding to the network node and RIC insert style types of the K actions; and the second information element includes at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

Optionally, the target service is a control service, and the first message is a control request message used for requesting to perform the control service to the network node; and the first related information includes control information of the K actions.

Optionally, the control information includes: a third information element and a fourth information element; the third information element includes: an identifier of a terminal corresponding to the network node and RIC style types of the K actions that need to be controlled; and the fourth information element includes at least one of the following:
the quantity of control actions;
an identifier of the control action;
RIC control decision;
a list of RAN parameters;
the quantity of RAN parameters;
an identifier of the RAN parameter;
a value type of the RAN parameter.

Optionally, the second message is an RIC control acknowledge message corresponding to the control request message; and the RIC control acknowledge message includes an execution result of each of the K actions by the network node.

Optionally, the RIC control acknowledge message includes at least one of the following:
the quantity of control action outcomes;
an identifier of a control action;
a list of RAN parameters;
the quantity of RAN parameters;
an identifier of the RAN parameter;
a value type of the RAN parameter.

Optionally, the list of RAN parameters carries a received timestamp of a target action, in a case where the network node accepts to execute the target action.

Optionally, the second message is the RIC control acknowledge message corresponding to the control request message, in a case where the network node accepts to execute at least one of the K actions.

In the embodiments of the present disclosure, a Near-RT RIC transmits a first message including multiple actions corresponding to a target service to a network node controlled by the Near-RT RIC. The network node feeds back a second message including multiple actions to the Near-RT RIC based on the first message, which achieves the control on multiple actions of the network node by the Near-RT RIC, enhances and optimizes the control method of the target service in the radio resource management process under the wireless network intelligent architecture, and enables the Near-RT RIC to support the optimization control procedure of the target service based on multiple control actions to instruct the network node to achieve RRM optimization goals, thereby improving the control efficiency of the Near-RT RIC and timeliness of optimization, avoiding conflicts that may be caused by asynchronous allocation of multiple resources, and enhancing the applicability in complex optimization scenarios for RAN resource allocation.

In FIG. 9, the bus architecture may include any number of interconnected buses and bridges. Specifically, various circuits of one or more processors represented by the processor 910 and a memory represented by the memory 920 are linked together. The bus architecture may also link various other circuits such as peripheral devices, voltage regulators, power management circuits, etc., which are well-known in the art, and therefore, no further descriptions are provided herein. The bus interface provides an interface. The transceiver 900 may be a plurality of elements, that is, include a transmitter and a receiver, and provide a unit for communicating with various other devices on a transmission medium. The processor 910 is responsible for managing the bus architecture and general processing, and the memory 920 may store data used by the processor 910 when performing operations.

The processor 910 may be a central processing unit (CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor may also adopt a multicore architecture.

It should be noted that the above-mentioned device provided in the embodiment of the present disclosure can achieve all the method steps of the method embodiments applied to the network node, and can achieve the same technical effects. The description and beneficial effects of this embedment that are the same as the method embodiments will not be described here in detail.

In addition, a specific embodiment of the present disclosure further provides a processor readable storage medium, where the processor readable storage medium stores a computer program. The computer program, when being executed, causes a processor to implement steps in the above radio network control method, and can achieve the same technical effects, which will not be described here to avoid repetition. The readable storage medium may be any available medium or data storage device that can be accessed by the processor, including but not limited to magnetic storage (such as floppy disk, hard disk, magnetic tape, magneto-optical disk (MO)), optical storage (such as CD, DVD, BD and HVD), and semiconductor memory (such as ROM, EPROM, EEPROM, non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer available storage media (including but not limited to disk storage, optical storage, etc.) including a computer available program code.

The present disclosure is described with reference to the flow chart and/or the block diagram of the method, device (system), and computer program product according to the embodiments of the present disclosure. It should be appreciated that each of processes and/or boxes in a flow chart and/or block diagram, and a combination of the processes and/or boxes in the flow chart and/or block diagram may be implemented by computer executable instructions. These computer executable instructions may be provided to a processor of a general-purpose computer, a specialized computer, an embedded processing device, or other programmable data processing devices to generate a machine that generates instructions executed by the processor of computer or other programmable data processing devices to implement functions specified in one or more processes and/or blocks in a flow chart.

These processor executable instructions may also be stored in processor-readable memory that may guide computers or other programmable data processing devices to work in a specific way, causing the instructions stored in the processor readable memory to generate a manufacturing product including instruction devices that implement the functions specified in one or more processes and/or blocks of a flow chart.

These processor executable instructions may also be loaded onto a computer or other programmable data processing device, enabling a series of operational steps to be performed on the computer or other programmable device to generate computer-implemented processing. Thus, instructions executed on computers or other programmable devices provide steps for implementing functions specified in one or more processes and/or boxes of a flow chart.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the embodiment of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A radio network control method, comprising:
transmitting, by a near real-time radio access network (RAN) intelligent controller (Near-RT RIC), a first message to a network node, wherein the first message comprises first related information of K actions corresponding to a target service, and the network node is a network node controlled by the Near-RT RIC; and
receiving, by the Near-RT RIC, a second message transmitted by the network node, wherein the second message is control-related information of the K actions, and K is greater than or equal to 1.

2. The method according to claim 1, wherein the target service is an insert service, and the first message is a RAN intelligent controller (RIC) subscription request message used for subscribing to the insert service; and
the first related information comprises: an action definition and a trigger event of the action, wherein the action definition indicates parameter information of an insert indication message corresponding to the K actions.

3. The method according to claim 2, wherein the action definition comprises at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

4. The method according to claim 2, wherein the second message is the insert indication message; and
the insert indication message is used to request the Near-RT RIC to control the K actions of the network node.

5. The method according to claim 4, wherein the insert indication message comprises:
a first information element and a second information element;
the first information element comprises: an identifier of a terminal corresponding to the network node and insert style types of the K actions; and
the second information element comprises at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

6. The method according to claim 1, wherein the target service is a control service, and the first message is a control request message used for requesting to perform the control service to the network node; and
the first related information comprises control information of the K actions.

7. The method according to claim 6, wherein the control information comprises: a third information element and a fourth information element;
the third information element comprises: an identifier of a terminal corresponding to the network node and RIC style types of the K actions that need to be controlled; and
the fourth information element comprises at least one of the following:
the quantity of control actions;
an identifier of the control action;
RIC control decision;
a list of RAN parameters;
the quantity of RAN parameters;
an identifier of the RAN parameter;
a value type of the RAN parameter.

8. The method according to claim 6, wherein the second message is an RIC control acknowledge message corresponding to the control request message; and
the RIC control acknowledge message comprises an execution result of each of the K actions by the network node.

9. The method according to claim 8, wherein the RIC control acknowledge message comprises at least one of the following:
the quantity of control action outcomes;
an identifier of a control action;
a list of RAN parameters;
the quantity of RAN parameters;
an identifier of the RAN parameter;
a value type of the RAN parameter.

10. The method according to claim 9, wherein the list of RAN parameters carries a received timestamp of a target action, in a case where the network node accepts to execute the target action.

11. The method according to claim 8, wherein the second message is the RIC control acknowledge message corresponding to the control request message, in a case where the network node accepts to execute at least one of the K actions.

12. A radio network control method, comprising:
receiving, by a network node, a first message transmitted by a Near-RT RIC, wherein the first message comprises first related information of K actions corresponding to a target service, and the Near-RT RIC is a controller corresponding to the network node; and
returning, by the network node, a second message to the Near-RT RIC based on the first message, wherein the second message is control-related information of the K actions, and K is greater than or equal to 1.

13. The method according to claim 12, wherein the target service is an insert service, and the first message is an RIC subscription request message used for subscribing to the insert service; and
the first related information comprises: an action definition and a trigger event of the action, wherein the action definition indicates parameter information of an insert indication message corresponding to the K actions.

14. The method according to claim 13, wherein the action definition comprises at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

15. The method according to claim 13, wherein the second message is the insert indication message; and
the insert indication message is used to request the RIC to control the K actions of the network node.

16. The method according to claim 15, wherein the insert indication message comprises: a first information element and a second information element;
the first information element comprises: an identifier of a terminal corresponding to the network node and insert style types of the K actions; and
the second information element comprises at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

17. The method according to claim 12, wherein the target service is a control service, and the first message is a control request message used for requesting to perform the control service to the network node; and
the first related information comprises control information of the K actions.

18. The method according to claim 17, wherein the control information comprises: a third information element and a fourth information element;
the third information element comprises: an identifier of a terminal corresponding to the network node and RIC style types of the K actions that need to be controlled; and
the fourth information element comprises at least one of the following:
the quantity of control actions;
an identifier of the control action;
RIC control decision;
a list of RAN parameters;
the quantity of RAN parameters;
an identifier of the RAN parameter;
a value type of the RAN parameter.

19. The method according to claim 17, wherein the second message is an RIC control acknowledge message corresponding to the control request message; and
the RIC control acknowledge message comprises an execution result of each of the K actions by the network node.

20. The method according to claim 19, wherein the RIC control acknowledge message comprises at least one of the following:
the quantity of control action outcomes;
an identifier of a control action;
a list of RAN parameters;
the quantity of RAN parameters;
an identifier of the RAN parameter;
a value type of the RAN parameter.

21. The method according to claim 20, wherein the list of RAN parameters carries a received timestamp of a target action, in a case where the network node accepts to execute the target action.

22. The method according to claim 19, wherein the second message is the RIC control acknowledge message corresponding to the control request message, in a case where the network node accepts to execute at least one of the K actions.

23. A radio network control device, comprising: a memory, a transceiver and a processor, wherein:
the memory is configured to store a computer program; the processor is configured to read the computer program from the memory; and the transceiver is configured to transmit and receive data under control of the processor, and perform the following operations:
transmitting a first message to a network node, wherein the first message comprises first related information of K actions corresponding to a target service, and the network node is a network node controlled by a Near-RT RIC; and
receiving a second message transmitted by the network node, wherein the second message is control-related information of the K actions, and K is greater than or equal to 1.

24. The device according to claim 23, wherein the target service is an insert service, and the first message is an RIC subscription request message used for subscribing to the insert service;
the first related information comprises: an action definition and a trigger event of the action, wherein the action definition indicates parameter information of an insert indication message corresponding to the K actions.

25. The device according to claim 24, wherein the action definition comprises at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

26. The device according to claim 24, wherein the second message is the insert indication message; and
the insert indication message is used to request the Near-RT RIC to control the K actions of the network node.

27. The device according to claim 26, wherein the insert indication message comprises: a first information element and a second information element;
the first information element comprises: an identifier of a terminal corresponding to the network node and insert style types of the K actions; and
the second information element comprises at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

28. The device according to claim 23, wherein the target service is a control service, and the first message is a control request message used for requesting to perform the control service to the network node; and
the first related information comprises control information of the K actions.

29. The device according to claim 28, wherein the control information comprises: a third information element and a fourth information element;
the third information element comprises: an identifier of a terminal corresponding to the network node and RIC style types of the K actions that need to be controlled; and
the fourth information element comprises at least one of the following:
the quantity of control actions;
an identifier of the control action;
RIC control decision;
a list of RAN parameters;
the quantity of RAN parameters;
an identifier of the RAN parameter;
a value type of the RAN parameter.

30. The device according to claim 28, wherein the second message is an RIC control acknowledge message corresponding to the control request message; and
the RIC control acknowledge message comprises an execution result of each of the K actions by the network node.

31. The device according to claim 30, wherein the RIC control acknowledge message comprises at least one of the following:
the quantity of control action outcomes;
an identifier of a control action;
a list of RAN parameters;
the quantity of RAN parameters;
an identifier of the RAN parameter;
a value type of the RAN parameter.

32. The device according to claim 31, wherein the list of RAN parameters carries a received timestamp of a target action, in a case where the network node accepts to execute the target action.

33. The device according to claim 30, wherein the second message is the RIC control acknowledge message corresponding to the control request message, in a case where the network node accepts to execute at least one of the K actions.

34. A radio network control device, comprising: a memory, a transceiver and a processor, wherein:
the memory is configured to store a computer program; the processor is configured to read the computer program from the memory; and the transceiver is configured to transmit and receive data under control of the processor, and perform the following operations:
receiving a first message transmitted by a Near-RT RIC, wherein the first message comprises first related information of K actions corresponding to a target service, and the Near-RT RIC is a controller corresponding to the network node; and
returning a second message to the Near-RT RIC based on the first message, wherein the second message is control-related information of the K actions, and K is greater than or equal to 1.

35. The device according to claim 34, wherein the target service is an insert service, and the first message is an RIC subscription request message used for subscribing to the insert service; and
the first related information comprises: an action definition and a trigger event of the action, wherein the action definition indicates parameter information of an insert indication message corresponding to the K actions.

36. The device according to claim 35, wherein the action definition comprises at least one of the following information:
the quantity of actions indicated by the insert indication message;
an identifier of an insert indication action;
a list of RAN parameters for the insert indication action;
the quantity of RAN parameters for the insert indication action;
an identifier of the RAN parameter.

37. The device according to claim 35, wherein the second message is the insert indication message; and
the insert indication message is used to request the RIC to control the K actions of the network node.

38. The device according to claim 37, wherein the insert indication message comprises: a first information element and a second information element;
the first information element comprises: an identifier of a terminal corresponding to the network node and insert style types of the K actions; and
the second information element comprises at least one of the following:
the quantity of actions indicated by the insert indication message;
an identifier of an insert indication action;
a list of RAN parameters as requested;
the quantity of RAN parameters as requested;
an identifier of the RAN parameter;
a value type of the RAN parameter.

39. The device according to claim 34, wherein the target service is a control service, and the first message is a control request message used for requesting to perform the control service to the network node; and
the first related information comprises control information of the K actions.

40. The device according to claim 39, wherein the control information comprises: a third information element and a fourth information element;
the third information element comprises: an identifier of a terminal corresponding to the network node and RIC style types of the K actions that need to be controlled; and
the fourth information element comprises at least one of the following:
the quantity of control actions;
an identifier of the control action;
RIC control decision;
a list of RAN parameters;
the quantity of RAN parameters;
an identifier of the RAN parameter;
a value type of the RAN parameter.

41. The device according to claim 39, wherein the second message is an RIC control acknowledge message corresponding to the control request message; and
the RIC control acknowledge message comprises an execution result of each of the K actions by the network node.

42. The device according to claim 41, wherein the RIC control acknowledge message comprises at least one of the following:
the quantity of control action outcomes;
an identifier of a control action;
a list of RAN parameters;
the quantity of RAN parameters;
an identifier of the RAN parameter;
a value type of the RAN parameter.

43. The device according to claim 42, wherein the list of RAN parameters carries a received timestamp of a target action, in a case where the network node accepts to execute the target action.

44. The device according to claim 41, wherein the second message is the RIC control acknowledge message corresponding to the control request message, in a case where the network node accepts to execute at least one of the K actions.

45. A radio network control device, comprising:
a first transmitting unit, configured to transmit a first message to a network node, wherein the first message comprises first related information of K actions corresponding to a target service, and the network node is a network node controlled by a Near-RT RIC; and
a first receiving unit, configured to receive a second message transmitted by the network node, wherein the second message is control-related information of the K actions, and K is greater than or equal to 1.

46. A radio network control device, comprising:
a second receiving unit, configured to receive a first message transmitted by a Near-RT RIC, wherein the first message comprises first related information of K actions corresponding to a target service, and the Near-RT RIC is a controller corresponding to the network node; and
a second transmitting unit, configured to return a second message to the Near-RT RIC based on the first message, wherein the second message is control-related information of the K actions, and K is greater than or equal to 1.

47. A processor readable storage medium, wherein the processor readable storage medium stores a computer program, and the computer program, when executed by a processor, causes the processor to perform steps in the radio network control method according to any one of claims 1 to 11, or to perform steps in the radio network control method according to any one of claims 12 to 22.
